# EUROPEAN PATENT SPECIFICATION

(11) **EP 1 969 276 B1**
(45) Date of publication and mention of the grant of the patent: **13.07.2011**
(21) Application number: 05850342.6
(22) Date of filing: 22.12.2005
(51) Int. Cl.: F16L 15/00

(54) **MODULAR TUBULAR ELEMENT**
MODULARES RÖHRENFÖRMIGES ELEMENT
ELEMENT TUBULAIRE MODULAIRE

(43) Date of publication of application: 17.09.2008
(73) Proprietor: Coolwater LLC, Marietta, GA 30067-3506 (US)
(72) Inventor: ZIGERLIG, Max, B-04551-060 Sao Paulo - SP (BR)
(74) Representative: Zardi, Marco
(86) International application number: PCT/EP2005/013945
(87) International publication number: WO 2007/071278

(56) References cited:
- EP-A- 1 249 657
- US-A- 2 450 452
- US-A- 2 450 453

## Description

### Technical field of the invention

The present invention relates to a modular tubular element for duct construction.

More in detail, the present invention relates to a modular tubular element for the construction of flues. The following description will make explicit reference to this particular application without however the invention being restricted thereto.

### Prior art

As is known, flues are normally composed of a series of modular tubular elements of circular section which are mutually engaged one in the other so to form a vertical conduit through which the discharge gases produced by a boiler may flow. Of course the tubular modular elements must be manufactured in material resistant to the high temperatures typical of the discharge gases exiting from the boiler, and must be appropriately structured so to facilitate the correct outflow of such gases through the flue without losses at the connections between adjacent modular tubular elements.

More in detail, according to the most recent safety regulations, the tubular elements must be manufactured in metallic material so to be able to resist both the high temperatures and the typical chemical attacks of the boiler discharge gases. Moreover they must be structured so that the coupling between the terminal ends of two consecutive modular tubular elements builds a gastight connection, ensuring no losses due to pressure differences between the inside and outside of the flue duct up to 0.1 bar.

In the presently known flues, the safety regulations are satisfied by manufacturing modular tubular elements of predetermined length which have both opposite ends shaped such to present a helical profile groove which wraps at constant pitch around a corresponding portion of the side wall of the tubular element. In addition to that described above, the opposite endes also have different diameter. A first end has a diameter which is substantially equal to the nominal diameter of the tubular element, while a second opposite end is flared so to have a diameter which is slightly greater than the diameter of the first end. The second end of a modular tubular element can thus be engaged on the first end of an adjacent modular tubular element by superimposing its own helical profile groove on that of the first end of the adjacent modular tubular element.

In this manner it is possible to screw the first end of a tubular element in the second end of the immediately adjacent tubular element, obtaining a mechanical coupling which guarantees the necessary structural stiffness.

To ensure the gastight seal required-by the current safety regulations, each tubular element of the flue is provided with an annular seal in plastic material which is positioned on its first end at the end of the side wall portion which has the helical profile groove. After that two adjacent modular tubular elements are engaged, such annular seal is flattened between the cylindrical side walls of the two modular tubular elements so to close in a gastight seal the hollow space present between such side walls and to therefore prevent the accidental escape of discharge gases at the connection between the adjacent modular tubular elements.

Unfortunately, the modular flue thus obtained has shown large seal problems over the long term, almost entirely due to the wear and the premature aging of the material which forms the annular seal. To overcome such drawback it has been proposed to use more resistant and costly plastic materials.

However, these materials, in addition of considerably increasing the production costs of the modular tubular elements, they are also subjected to a certain wear and aging over the long term, thus requiring their periodical replacement for ensuring the desired gas seal.

EP-A-1 249 657 discloses prior art modular tubular elements for gas pipelines.

### S*ummary of the invention

The problem underlying the present invention is therefore that of providing a modular tubular element for the duct, in particular flue, construction, which is reliable and can ensure gas seal over the long term and which is at the same time easy and economical to produce and to maintain, thus overcoming the drawbacks set forth with reference to the prior art.

According to the present invention, a modular tubular element is provided for duct construction comprising a circular section tubular conduit of predetermined length which is structured so to have a first male terminal portion and a second female opposite terminal portion, both portions being shaped in complementary manner to each other so that the first male terminal portion of a first modular tubular element may be engaged in the second female terminal portion of a second modular tubular element, obtaining a gastight connection between said first and second modular tubular elements; said modular tubular element being characterized in that said first male terminal portion of said circular section tubular conduit comprises a threaded portion provided at end thereof, corresponding to a first end of the circular section tubular element, and an adjacent inner sealing portion shaped in barrel form; said second female opposite terminal portion of said circular section tubular conduit comprises a substantially cylindrical portion provided at an end thereof, engageable with said inner sealing portion of the first male terminal portion corresponding to a second opposite end of the circular section tubular conduits, and an adjacent inner threaded portion, and in that the barrel-shaped inner sealing portion of said first male terminal portion of the circular section tubular conduit has at least one section, preferably a central section, with a diameter greater than the diameter of said adjacent threaded end portion, and greater than diameter of the cylindrical end portion of said second female terminal portion. Said at least one section is preferably of substantially cylindrical shape. Preferably, said inner sealing portion of said first male terminal portion of the circular section tubular conduit is embossed.

Advantageously, according to the present invention, said cylindrical end portion of said second opposite female terminal portion of the circular section tubular conduit is sized so to have a diameter which is greater than the diameter of the threaded end portion but slightly smaller than the diameter of said at least one section of the barrel-shaped inner sealing portion of said first male terminal portion.

Preferably, the cylindrical end portion of said second opposite female terminal portion of the circular section tubular conduit has a predetermined length so as to guarantee that, when two adjacent modular tubular elements (1) are coupled, at least a part of said cylindrical end portion overlaps said at least one section of the barrel-shaped inner sealing portion of said first male terminal portion when the adjacent threaded inner portion is engaged with the threaded end portion of said first male terminal portion.

The present invention will now be described with reference to the attached drawings, which illustrate a not limiting embodiment thereof, wherein:
- figure 1 is an exploded view of a modular flue obtained by means of modular tubular elements according to the present invention;
- figure 2 illustrates a detail of figure 1, in enlarged scale and with sectional parts; while
- figures 3 and 4 illustrate two consecutive steps of the coupling of two modular tubular elements illustrated in figures 1 and 2.

### Detailed description

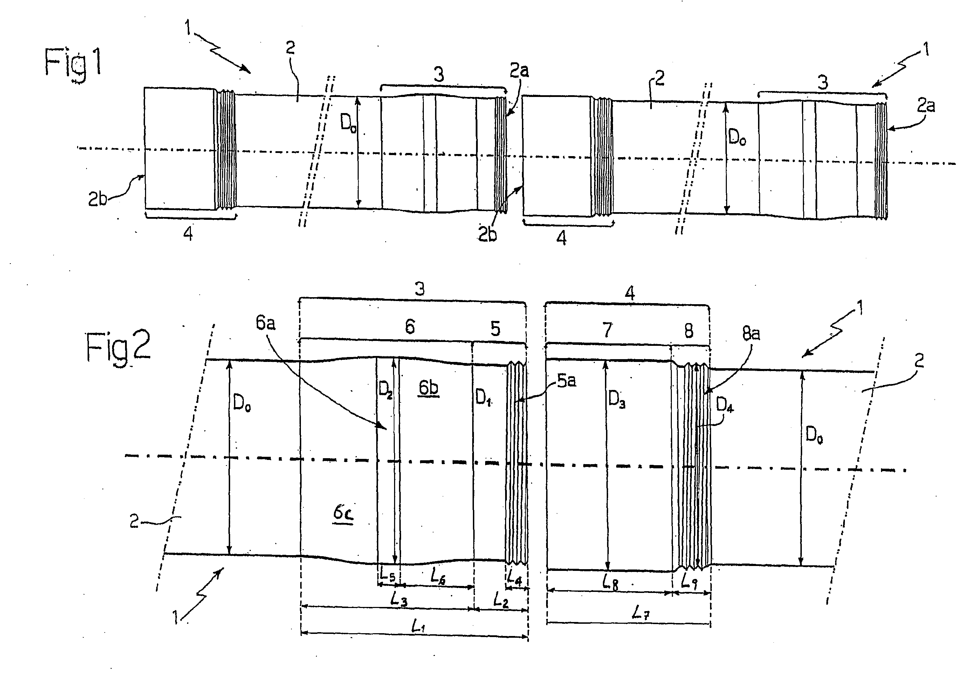

With reference to figures 1-4, numeral 1 generally indicates a modular tubular element, which has particularly advantageous use in the construction of pressure ducts and, more in particular, in the construction of flues, i.e. discharge conduits preferably but not necessarily of vertical extension, through which the discharge gases produced by a boiler, stove, fireplace etc. flow during its normal functioning.

The modular tubular element 1 is composed of a circular section tubular conduit 2 of predetermined length, which is preferably but not necessarily manufactured in metallic material (such as, for example, stainless steel) and is structured such to have a first male terminal portion 2a and a second female opposite terminal portion 2b. Both portions 2a, 2b are shaped in complementary manner to each other so that the first male terminal portion 2a of a first modular tubular element 1 may be engaged in the second female terminal portion 2b of a second modular tubular element 1, obtaining a gastight connection between said first and second modular tubular elements 1.

More in detail, the first male terminal portion 2a of said circular section tubular conduit 2 comprises a segment 3 composed of a threaded portion 5 provided at end thereof, corresponding to a first end of the circular section tubular element 2, and an adjacent inner sealing portion 6 shaped substantially in barrel form. The second female opposite terminal portion 2b of said circular section tubular conduit 2 comprises a segment 4 composed of a substantially cylindrical portion 7 provided at an end thereof, corresponding to a second opposite end of the circular section tubular conduit 2, and an adjacent inner threaded portion 8.

In other words, segments 3, 4 are shaped in complementary manner with respect to each other such that one may be engaged in the other in a gastight connection, or more precisely, so that the segment 3 of a circular section tubular conduit 2 of a first modular tubular element 1 may be coupled with the segment 4 of an immediately adjacent circular section tubular conduit 2 of a second modular tubular element 1, thus obtaining a gastight seal capable of satisfying current safety regulations.

With reference to figures 1 and 2, the segment 3 of the circular section tubular conduit 2 has a predetermined length L1, wherein the threaded end portion 5 has a length L2 which has a substantially cylindrical shape. The threaded end portion 5 has an external, peripheral, thread 5a, which extends till the end of the circular section tubular conduit 2, corresponding to one end of the side wall of the modular tubular element 1, for a predetermined length L4, which is preferably but not necessarily less than the overall length L2 of the threaded end portion 5. The threaded end portion 5 has (nominal) diameter D1 preferably but not necessarily equal to the (nominal) diameter D0 of the tubular element 1, i.e. of the central portion of the circular section tubular conduit 2.

The adjacent inner sealing portion 6 of the segment 3 has instead a length L3 and is shaped substantially in barrel form so to have at least one section, preferably a central section 6a, with a (nominal) diameter D2 greater than the (nominal) diameter D1 of the adjacent threaded end portion 5 and than the (nominal) diameter D0 of the modular tubular element 1. The central section 6a is preferably of substantially cylindrical shape. The adjacent inner sealing portion 6 of the segment 3 also has two side sections 6b, 6c of substantially frustoconical shape which connect the central section 6a with the remaining parts of the circular section tubular conduit 2 with smaller diameter i.e. the threaded end portion 5 and the central portion of the circular section tubular conduit 2, respectively.

In the illustrated example, the central section 6a of the inner sealing portion 6 extends for a length L5 along the inner sealing portion 6 of segment 3, which is preferably but not necessarily less than the length L4 of the thread 5a of the threaded end portion 5. While the side section 6b of the inner sealing portion 6 connecting the central section 6a with the threaded end portion 5 is shaped substantially in funnel form and has a length L6 which is preferably greater than the length L5 of the central section 6a.

The threaded end portion 5 is preferably obtained by moulding directly on the circular section tubular conduit 2 with diameter D1, providing a helical profile groove which wraps at constant pitch at the end of the circular section tubular conduit 2 for a length L4, while the inner sealing portion 6 is obtained by moulding directly on the corresponding segment of the circular section tubular conduit 2, providing an annular projection of length L3. In other words, an embossed inner sealing portion 6 is provided.

With reference to figures 1 and 2, segment 4 of the second female opposite terminal portion 2b of the circular section tubular conduit 2 has a predetermined length L7, while the substantially cylindrical end portion 7 has a length L8 and the adjacent inner threaded portion 8 has a length L9. The substantially cylindrical end portion 7 has a (nominal) diameter D3 which is slightly smaller than the diameter D2 of the central section 6a of the inner sealing portion 6 of segment 3. The diameter D3 of the cylindrical end portion 7 of segment 4 is also sized so to have a diameter which is greater than the diameter D1 of the threaded end portion 5 of segment 3.

The length L8 of the substantially cylindrical end portion 7 preferably satisfies the following equation: L8>= L6+(L2-L4). Other said, the length L8 of the substantially cylindrical end portion 7 must preferably be greater than or equal to the length L6 of the side section 6b of the inner sealing portion 6 of the segment 3 plus the difference between the length L2 of the threaded end portion 5 and the length L4 of the thread 5a of the same threaded end portion 5 of the segment 3.

In other words, the substantially cylindrical end portion 7 of a first modular tubular element 1 must have a predetermined length L8 sufficient to ensure that at least a part thereof is superimposed on, i.e. overlaps, the central section 6a of the inner sealing portion 6 of the male terminal portion 2a of a second modular tubular element 1 when the threaded inner portion 8 of the female terminal portion 2b of the first modular tubular element 1 is engaged (screwed) with the thread 5a of the threaded end portion 5 of the male terminal portion 2a of the second modular tubular element 1.

In addition to that described above, the length L8 of the substantially cylindrical end portion 7 must be preferably but not necessarily less than the sum of the length L2 of the threaded end portion 5 and the length L6 of the side section 6b of the inner sealing portion 6 of the segment 3. Or other said, the length L8 of the substantially cylindrical end portion 7 must preferably satisfy the following equation: L8 < L6 + L2.

The threaded inner portion 8 of segment 4 of the female terminal portion 2b has preferably a cylindrical shape with a (nominal) diameter D4, which is slighter greater than the (nominal) diameter D3 of the threaded end portion 5 of segment 3 of the male terminal portion 2a. The threaded inner portion 8 has a thread 8a which is sized so that it may be coupled with the thread 5a of the threaded end portion 5, thus to permit the coupling and locking by screwing of the segment 4 of a tubular element 1 on the segment 3 of a further, immediately adjacent, tubular element 1.

More in detail, the threaded inner portion 8 is provided with an inner thread 8a which extends towards the central portion of the circular section tubular conduit 2 for a length L9 which is preferably greater than the length L5 of the central section 6a of the inner sealing portion 6 of the segment 3. Preferably but not exclusively, such length L9 is also greater than the length L4 of the thread portion 5a of the threaded end portion 5.

In the illustrated example, the inner thread 8a extends towards the central portion of the circular section tubular conduit 2 for a length L9 which is equal to the overall length of the threaded inner portion 8.

The substantially cylindrical end portion 7 is preferably obtained by moulding, flaring the circular section tubular conduit 2 until the diameter D3 is attained. The threaded inner portion 8 is preferably obtained by moulding directly on the corresponding part of the circular section tubular conduit 2 of diameter D4, obtaining a helical profile groove which wraps at constant pitch around the entire length L9 of the threaded inner portion 8. Such helical groove is of course sized so that it may be superimposed on the helical thread 5a present on the threaded end portion 5 of the segment 3 of the circular section tubular conduit 2.

The operation of the tubular element 1 may be easily inferred from that described and illustrated above and does not therefore require further explanation.

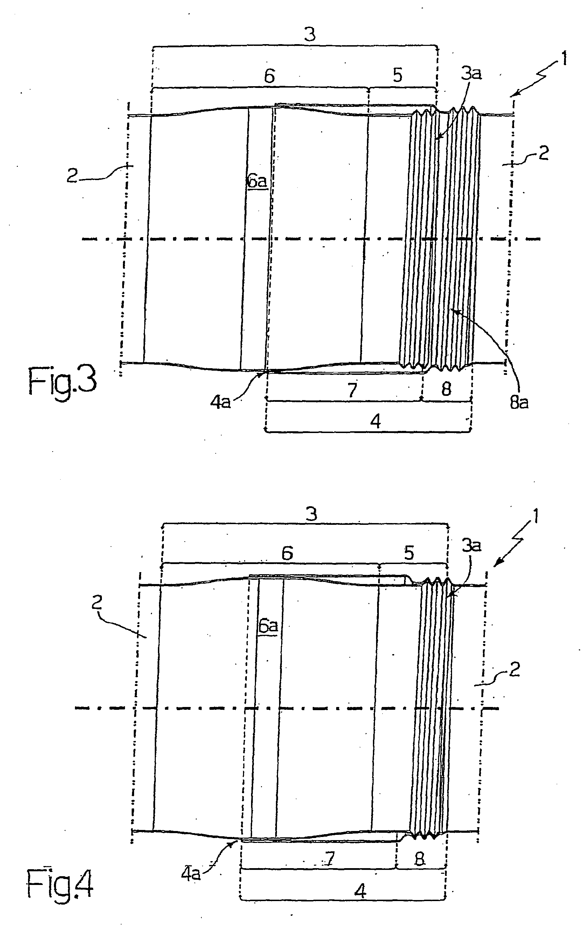

On the other hand, regarding the coupling between two consecutive modular tubular elements 1, i.e. the connection between the male terminal portion 2a of a first modular tubular duct 1 with the female terminal portion 2b of a second modular tubular element 1, the following is noted with reference to figures 3 and 4.

The segment 3 of a first tubular element 1 is inserted within the segment 4 of an immediately adjacent second tubular element 1, until the edge (end) 3a of the segment 3 abuts on the edge of the thread 8a of the threaded inner portion 8 of segment 4, i.e. on the border line which separates the substantially cylindrical end portion 7 from the threaded inner portion 8 (figure 3).

In this position, the edge (end) 4a of the segment 4, i.e. the edge (outer end) of the substantially cylindrical end portion 7, is arranged immediately in front of the central section 6a of the inner sealing portion 6 of the segment 3 which, as already described above, has a diameter D2 slightly greater than the diameter D3 of the substantially cylindrical end portion 7 of the segment 4.

At this point (figure 4), screwing the segment 3 of the first modular tubular element 1 in the segment 4 of the immediately adjacent modular tubular element 1, it is possible to force the edge 4a of the section 4 to pass over (overlap) the central section 6a of the inner sealing portion 6 of the segment 3, bringing the substantially cylindrical end portion 7 of the section 4 above the threaded end portion 5 of the segment 3. At the same time, the threaded inner portion 8 of the segment 4 is brought above the threaded end portion 5 of the segment 3. The above overlapping induces a plastic deformation of the substantially cylindrical end portion 7 of the immediately adjacent tubular element 1 on the central section 6a of the inner sealing portion 6 of the first modular tubular element 1.

In view of the plastic deformation of the substantially cylindrical end portion 7 of the tubular modular element 1 on the central section 6a of the inner sealing portion 6 of the adjacent modular tubular element 1, the side walls of the two corresponding circular section tubular conduits 2 remain perfectly adherent, providing a gastight connection (seal) which is able to fully satisfies the requirements in force in the current safety regulations.

The advantages resulting from the above described modular tubular element 1 according to the present invention are many, among them it is worth citing that the modular tubular elements 1 for flue construction or, more in general, for the construction of pressure ducts, do not require any annular seal in plastic material to obtain the necessary gastight seal between adjacent modules thus improving the their reliability and at the same time reducing the production and maintenance costs with respect to the prior art modular elements.

The flue obtained by the tubular elements 1 according to the present invention is furthermore much easier and quicker to install, permitting therefore a reduction in the laying costs as well.

## Claims

1. A modular tubular element (1) for duct construction, the modular tubular element comprising a circular section tubular conduit (2) of a predetermined length, said conduit (2) having a first male terminal portion (2a) and a second female opposite terminal portion (2b), said male and female terminal portions being shaped complementary to each other so that the first male terminal portion (2a) of a first modular tubular element can be engaged in the second female terminal portion (2b) of a second modular tubular element obtaining a gas-tight connection between said first and second elements, said modular tubular element (1) being **characterized in that**
a) said first male terminal portion (2a) comprises a threaded end portion (5) and an inner sealing portion (6) adjacent to said threaded portion, said sealing portion (6) being shaped in a barrel form;
b) said second female terminal portion (2b) comprises a substantially cylindrical end portion (7) engageable with said inner stealing portion (6) of the first male terminal portion (2a), and an adjacent inner threaded portion (8) complementary to the threaded end (5) of the first male terminal portion (2a);
c) said barrel-shaped inner sealing portion (6) of the first male terminal portion (2a) comprising different sections with different diameters, has at least one section (6a) with a diameter (D2) greater than the diameter (D1) of said threaded end portion (5) of the first male terminal portion (2a), and greater than the diameter (D3) of said cylindrical end portion (7) of said second female opposite terminal portion (2b).

2. A modular element (1) according to claim 1, **characterized in that** said at least one section (6a) of the sealing portion (6) of the male terminal portion (2a) is a central section of the sealing portion.

3. A modular element (1) according to claim 1, **characterized in that** said inner sealing portion (6) of said first male terminal portion (2a) is embossed.

4. A modular element (1) according to claim 1, **characterized in that** the cylindrical end portion (7) of said second female terminal portion (2b) has a length (L8) so as to guarantee that, when a first and a second modular tubular elements (1) are coupled, at least a part of said cylindrical end portion (7) of the second element overlaps the barrel-shaped inner sealing portion (6) of the first male terminal portion (2a) of the first element (2a) when the threaded inner portion (8) of the female terminal portion of said second element is engaged with the threaded end portion (5) of the first male terminal portion (2a) of the first element.

5. A modular element (1) according to claim 1, **characterized in that** said inner sealing portion (6) comprises two side sections (6b, 6c) of substantially frusto-conical shape connected at one end with said central section (6a) and with the opposed end with the threaded end portion (5) and a central portion of the circular section tubular conduit (2), respectively.

6. A modular element (1) according to claim 4, **characterized in that** said cylindrical end portion (7) has a length (L8) shorter than the sum of the length (L2) of the threaded end portion (5) and of the length (L6) of the side portion (6b) of the inner sealing portion (6) connecting said central section (6a) with said threaded end portion (5).

7. A modular element (1) according to claim 1, **characterized in that** the threaded end portion (5) of the first male terminal portion (2a) comprises a
thread (5a) which extends till an end of the circular section tubular conduit (2) for a predetermined length (L4), which is shorter than the length (L2) of the threaded end portion (5).

8. A modular element (1) according to claim 7, **characterized in that** said central section (6a) of the inner sealing portion (6) of said first male terminal portion (2a) has a length (L5) which is shorter than the length (L4) of said thread (5a) of the threaded end portion (5).

9. A flue **characterized in that** it is composed of a plurality of modular tubular elements (1) according to any one of the preceding claims.

## Patentansprüche

1. Modulares rohrförmiges Element (1) zum Rohraufbau, wobei das modulare rohrförmige Element einen rohrförmigen Kanal (2) kreisförmigen Querschnitts mit einer vorbestimmten Länge aufweist, wobei der Kanal (2) einen ersten, inneren Endabschnitt (2a) und einen zweiten, das Gegenstück bildenden äußeren Endabschnitt (2b) aufweist, wobei der innere und äußere Endabschnitt komplementär zueinander so geformt sind, dass der erste, innere Endabschnitt (2a) eines ersten modularen rohrförmigen Elements in dem zweiten,- äußeren Endabschnitt (2b) eines zweiten modularen rohrförmigen Elements in Eingriff gebracht werden kann, wobei eine gasdichte Verbindung zwischen dem ersten und zweiten Element erhalten wird, wobei das modulare rohrförmige Element (1) **dadurch gekennzeichnet ist, dass**:
a) der erste, innere Endabschnitt (2a) einen Gewindeendbereich (5) und einen sich an den Gewindebereich anschließenden Innendichtabschnitt (6) aufweist, wobei der Dichtabschnitt (6) in bombierter Form ausgebildet ist;
b) der zweite, äußere Endabschnitt (2b) einen im Wesentlichen zylindrischen Endabschnitt (7), der mit dem Innendichtabschnitt (6) des ersten, inneren Endabschnitts (2a) in Eingriff gebracht werden kann, und einen sich daran anschließenden Innengewindebereich (8) aufweist, der komplementär zum Gewindeendbereich (5) des ersten, inneren Endabschnitts (2a) ist;
c) der bombierte Innendichtabschnitt (6) des ersten, inneren Endabschnitts (2a), der verschiedene Querschnitte mit unterschiedlichen Durchmessern hat, mindestens einen Teilbereich (6a) mit einem Durchmesser (D2) aufweist, der größer als der Durchmesser (D1) des Gewindeendbereichs (5) des ersten, inneren Endabschnitts (2a) und größer als der Durchmesser (D3) des zylindrischen Endabschnitts (7) des zweiten, das Gegenstück bildenden äußeren Endabschnitts (2b) ist.

2. Modulares Element (1) nach Anspruch 1, **dadurch gekennzeichnet, dass** der mindestens eine Teilbereich (6a) des Dichtabschnitts (6) des inneren Endabschnitts (2a) ein mittiger Teilbereich des Dichtabschnitts ist.

3. Modulares Element (1) nach Anspruch 1, **dadurch gekennzeichnet, dass** der Innendichtabschnitt (6) des ersten, inneren Endabschnitts (2a) formgeprägt ist.

4. Modulares Element (1) nach Anspruch 1, **dadurch gekennzeichnet, dass** der zylindrische Endabschnitt (7) des zweiten, äußeren Endabschnitts (2b) eine Länge (L8) hat, um zu gewährleisten, dass, wenn ein erstes und ein zweites modulares rohrförmiges Element (1) miteinander verbunden sind, zumindest ein Teil des zylindrischen Endabschnitts (7) des zweiten Elements den bombierten Innendichtabschnitt (6) des ersten, inneren Endabschnitts (2a) des ersten Elements übergreift, wenn der Innengewindebereich (8) des äußeren Endabschnitts des zweiten Elements mit dem Gewindeendbereich (5) des ersten, inneren Endabschnitts (2a) des ersten Elements in Eingriff ist.

5. Modulares Element (1) nach Anspruch 1, **dadurch gekennzeichnet, dass** der Innendichtabschnitt (6) zwei seitliche Teilbereiche (6b, 6c) von im Wesentlichen kegelstumpfförmiger Gestalt hat, die an einem Ende mit dem mittigen Teilbereich (6a) und mit dem entgegengesetzten Ende mit dem Gewindeendbereich (5) bzw. einem mittigen Abschnitt des rohrförmigen Kanals (2) kreisförmigen Querschnitts verbunden sind.

6. Modulares Element (1) nach Anspruch 4, **dadurch gekennzeichnet, dass** der zylindrische Endabschnitt (7) eine Länge (L8) hat, die länger als die Summe aus der Länge (L2) des Gewindeendbereichs (5) und der Länge (L6) des seitlichen Teilbereichs (6b) des Innendichtabschnitts (6) ist, der den mittigen Teilbereich (6a) mit dem Gewindeendbereich (5) verbindet.

7. Modulares Element (1) nach Anspruch 1, **dadurch gekennzeichnet, dass** der Gewindeendbereich (5) des ersten, inneren Endabschnitts (2a) ein Gewinde (5a) aufweist, das sich über eine vorbestimmte Länge (L4) bis zu einem Ende des rohrförmigen Kanals (2) kreisförmigen Querschnitts erstreckt, welche Länge (L4) kürzer ist als die Länge (L2) des Gewindeendbereichs (5).

8. Modulares Element (1) nach Anspruch 7, **dadurch gekennzeichnet, dass** der mittige Teilbereich (6a) des Innendichtabschnitts (6) des ersten, inneren Endabschnitts (2a) eine Länge (L5) hat, die kürzer ist als die Länge (L4) des Gewindes (5a) des Gewindeendbereichs (5).

9. Abzugsrohr, **dadurch gekennzeichnet, dass** es sich aus mehreren modularen rohrförmigen Elementen (1) nach einem der vorhergehenden Ansprüche zusammensetzt.

## Revendications

1. Elément tubulaire modulaire (1) pour une construction de conduite, l'élément tubulaire modulaire comportant une conduite tubulaire de section circulaire (2) ayant une longueur prédéterminée, ladite conduite (2) ayant une première portion terminale mâle (2a) et une seconde portion terminale femelle opposée (2b), lesdites portions terminales mâle et femelle étant formées complémentaires l'une de l'autre de telle sorte que la première portion terminale mâle (2a) d'un premier élément tubulaire modulaire peut être mise en prise dans la seconde portion terminale femelle (2b) d'un second élément tubulaire modulaire en obtenant un raccordement étanche aux gaz entre lesdits premier et second éléments, ledit élément tubulaire modulaire (1) étant **caractérisé en ce que** :
a) ladite première portion terminale mâle (2a) comporte une portion d'extrémité filetée (5) et une portion d'étanchéité interne (6) adjacente à ladite portion filetée, ladite portion d'étanchéité (6) étant mise en forme de tonneau,
b) ladite seconde portion terminale femelle (2b) comporte une portion d'extrémité sensiblement cylindrique (7) pouvant venir en prise avec ladite portion d'étanchéité interne (6) de la première portion terminale mâle (2a), et une portion filetée interne adjacente (8) complémentaire de l'extrémité filetée (5) de la première portion terminale mâle (2a),
c) ladite portion d'étanchéité interne en forme de tonneau (6) de la première portion terminale mâle (2a) comportant différents tronçons de différents diamètres, a au moins un tronçon (6a) ayant un diamètre (D2) supérieur au diamètre (D1) de ladite portion d'extrémité filetée (5) de la première portion terminale mâle (2a), et supérieur au diamètre (D3) de ladite portion d'extrémité cylindrique (7) de ladite seconde portion terminale femelle opposée (2b).

2. Elément modulaire (1) selon la revendication 1, **caractérisé en ce que** ledit au moins un tronçon (6a) de la portion d'étanchéité (6) de la portion terminale mâle (2a) est un tronçon central de la portion d'étanchéité.

3. Elément modulaire (1) selon la revendication 1, **caractérisé en ce que** ladite portion d'étanchéité interne (6) de ladite première portion terminale mâle-(2a) est bosselée.

4. Elément modulaire (1) selon la revendication 1, **caractérisé en ce que** la portion d'extrémité cylindrique (7) de ladite seconde portion terminale femelle (2b) a une longueur (L8) de manière à garantir que, lorsqu'un premier et un second éléments tubulaires modulaires (1) sont couplés, au moins une partie de ladite portion d'extrémité cylindrique (7) du second élément chevauche la portion d'étanchéité interne en forme de tonneau (6) de la première portion terminale mâle (2a) du premier élément lorsque la portion interne filetée (8) de la portion terminale femelle dudit second élément est en prise avec la portion d'extrémité filetée (5) de la première portion terminale mâle (2a) du premier élément.

5. Elément modulaire (1) selon la revendication 1, **caractérisé en ce que** ladite portion d'étanchéité interne (6) comporte deux tronçons latéraux (6b, 6c) de forme sensiblement tronconique reliés, au niveau d'une extrémité, audit tronçon central (6a) et, au niveau de l'extrémité opposée, à la portion d'extrémité filetée (5) et à une portion centrale de la conduite tubulaire de section circulaire (2), respectivement.

6. Elément modulaire (1) selon la revendication 4, **caractérisé en ce que** ladite portion d'extrémité cylindrique (7) a une longueur (L8) plus courte que la somme de la longueur (L2) de la portion d'extrémité filetée (5) et de la longueur (L6) de la portion latérale (6b) de la portion d'étanchéité interne (6) reliant ledit tronçon central (6a) à ladite portion d'extrémité filetée (5).

7. Elément modulaire (1) selon la revendication 1, **caractérisé en ce que** la portion d'extrémité filetée (5) de la première portion terminale mâle (2a) comporte un filetage (5a) qui s'étend jusqu'à une extrémité de la conduite tubulaire de section circulaire (2) sur une longueur prédéterminée (L4) qui est plus courte que la longueur (L2) de la portion d'extrémité filetée (5).

8. Elément modulaire (1) selon la revendication 7, **caractérisé ce que** ledit tronçon central (6a) de la portion d'étanchéité interne (6) de ladite première portion terminale mâle (2a) a une longueur (L5) qui est plus courte que la longueur (L4) dudit filetage (5a) de la portion d'extrémité filetée (5).

9. Carneau **caractérisé en ce qu'**il est composé d'une pluralité d'éléments tubulaires modulaires (1) selon l'une quelconque des revendications précédentes.
